# EUROPEAN PATENT APPLICATION

(11) **EP 1 772 634 A2**
(43) Date of publication of application: **11.04.2007**
(21) Application number: 06121821.0
(22) Date of filing: 05.10.2006
(51) Int. Cl.: F16B 7/04, F16B 12/10, F16B 12/58

(54) **Hooking and locking system for supporting elements of shelves in shelvings, scaffoldings or the like**

(30) Priority: 06.10.2005 IT VR20050024 U
(71) Applicant: Mittel Group S.r.l., 31014 Colle Umberto (TV) (IT)
(72) Inventor: Dall'Armellina, Adriano, 33077, Sacile (PN) (IT)
(74) Representative: Fisauli, Beatrice A. M.

(57) **Abstract**

A hooking and locking system (1,2) is proposed for shelves of shelvings, scaffoldings or the like. The present system consists in locking a shelf on an upright by utilizing the principle of the cone connection to obtain an excellent stability as regards torsion and a bolt-nut (5) coupling to obtain a perfect locking in a horizontal and vertical direction. In this way, it is possible to low the production costs of the present system and above all, it is possible to accomplish rapid assembling operations and to guarantee the best stability of the shelving.

## Description

The present invention refers to an improved hooking and locking system to be used, preferably but not limited to, for the carrying out of a connection between the elements of shelvings, scaffoldings or the like.

More precisely, it is a hooking and locking system for shelves of shelvings, scaffoldings or the like in which the shelves are blocked on an upright by utilizing the principle of the cone connection.

The principle of the cone connection is known in the sector but it is used with new technical measures to better the production system and especially the mounting techniques.

The particular shape of the present invention permits to obtain a finished product of a high stability and easy to be mounted.

As is known, especially in the sector of furniture and shelving as well as in general, in the sector of building accessories, the market offers several constructive techniques which consist in the mounting of shelves which are disposed and fixed to their respective uprights according to various systems, for instance for the mounting of shelves, shelvings, scaffoldings or the like.

The prior art includes several systems to fix shelves to their respective upright. For instance, in case of parallel flat surfaces, known techniques utilize at least two pairs of bolt-nuts, which involves a slow assembling operation and an insufficient stability.

In an attempt to facilitate the assembly, structures were conceived in which there were complex joints, used in industry. The use of said joints permits to obtain a higher speed in the assembly and installation, which is a very important characteristic in this sector.

One of the systems utilized in this sector is the locking through supporting elements and cone connections or inclined surface connections; the advantage of said systems is to obtain a coupling with an increasing resistance since the resistance increases as the load increases, at least theoretically.

Said coupling systems consist in coupling a shelf with an upright through further elements; in fact, at first, a dismountable annular body is coupled with the upright through suitable means. Then, on the upper part of said annular body, a frustum-conical or frustum-pyramidal element is inserted from the top and is supported by the annular body showing a corresponing shape.

Said frustum-conical or frustum-pyramidal element is provided with connecting means to be connected with the relative shelf. The connecting means may be for instance groove and tongue joints.

On the one hand, all the above solutions simplify the mounting system for it is sufficient to insert the hook in its respective seat. On the other hand, said solutions do not permit a sufficient solidity and stability which are basic requirements together with the requirement of the assembling speed.

The object of the invention is to remove the above-mentioned drawbacks and other ones by utilizing a conical hooking system with multiple contact points, connected to a circular upright, as well as connecting means between the frustum-conical/frustum-pyramidal element.

The invention refers to an improved hooking and locking system which is especially suitable to be utilized to form supporting elements for shelves of shelvings, scaffoldings, or the like, characterized in that at least a shelf angle bar shows a recessing shaped like an arc of circle, of about 90° in which there is an opening and that each shelf angle bar is coupled with a supporting element which consists of a frustum-conical piece; at least a longitudinal threaded body is fixed to the surface of said frustum-conical piece and is inserted in said opening; the supporting element is secured to said shelf angle bar by means of a nut which is screwed in said threaded longitudinal body.

A first advantage of the present invention regards the practical requirement of an ease assembly.

In fact, the coupling of the shelf angle bar shaped like an arc of circle and the frustum-conical supporting element permits to produce a final structure with a high level of solidity.

In addition, the use of hooking units showing a multiple conicity and the use of conical circular uprights and not square or triangular uprights involve a considerable increase in the stability.

As regards the costs, the invention is advantageous thanks to its great simplicity of construction. Very cheap components and elements are used. Said components and elements are obtained with simple moulding techniques or joining techiques through spot welding, the costs being thus reduced.

Another advantage is represented by the fact that the coupling of the shelf with the supporting frustum-cone, through a frustum-conical key, annuls, geometrically speaking, any possibility of play and permits to use only a bolt-nut pair.

In addition, as an advantage, the use of the bolt-nut coupling permits to adjust the tightening and to obtain an adjustable rigidity connection as well as the desired stability degree.

Further features and details of the present invention will be better understood from the following description which is set forth as a non-limiting example on the hand of the accompanying drawings in which:

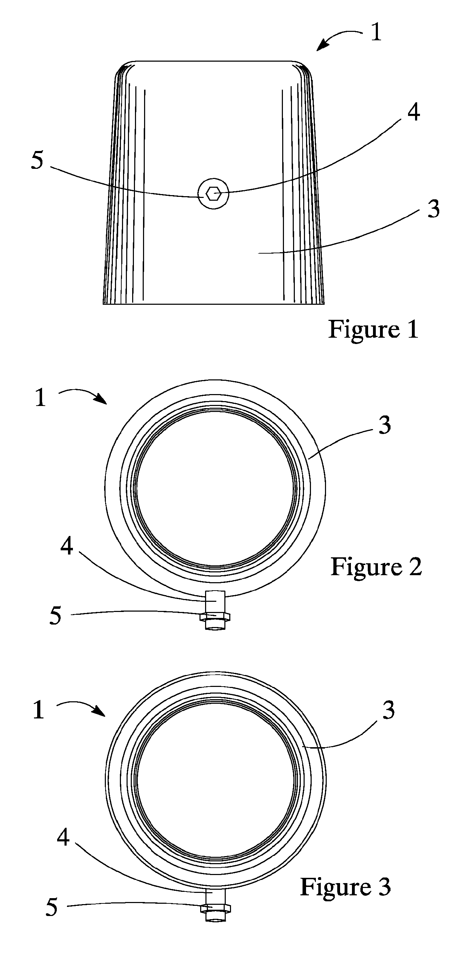

Fig. 1 is a schematic front view of one of the circular frustum-conical elements that support the shelves;
Fig. 2 is a schematic top plan view of the same supporting element in Fig. 1;
Fig. 3 is a schematic bottom plan view of the same supporting element in Fig. 1;
Fig. 4 is a schematic view of one of the angle bars of the shelf to be mounted according to a first embodiment;
Fig. 5 is a schematic view of one of the angle bars of the shelf to be mounted according to a second embodiment;
Fig. 6 is a schematic view of a first assembling phase of a structure provided with the hooking system according to the present invention;
Fig. 7 is a schematic view of a second assembling phase of a structure provided with said hooking system;
Fig. 8 is a schematic view of a third assembling phase of a structure provided with said hooking system.

With reference to the accompanying drawings, number 1 denotes a supporting element on the whole. The supporting element 1 comprises a frustum-conical element 3. The side of the frustum-conical element 3 has at least a threaded longitudial body 4. A nut 5 is screwed in said longitudinal body 4.

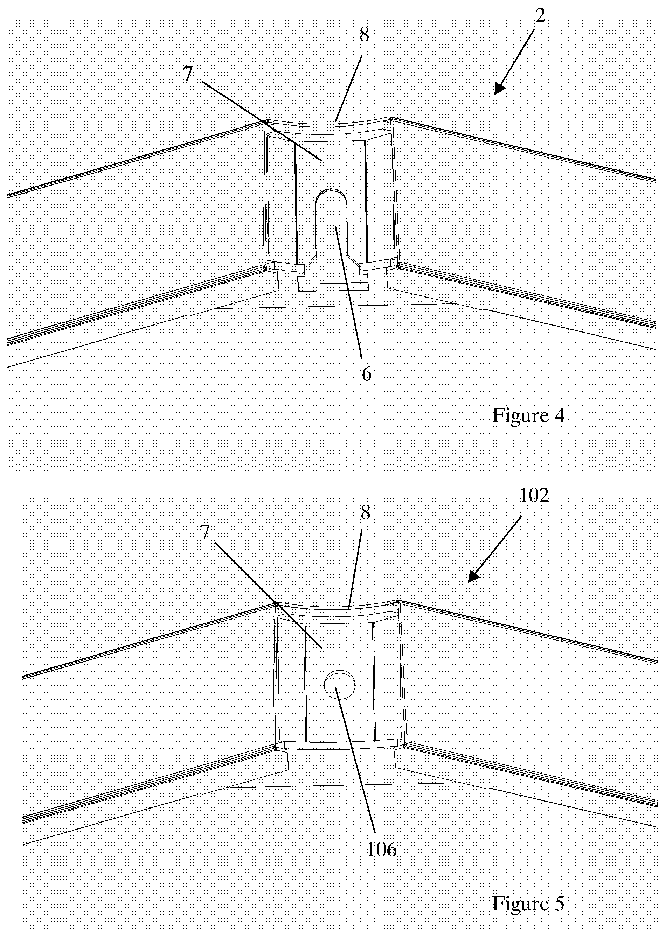

Said supporting element 1 is coupled with one or more shelves 2 that can be seen in particular in Figures 4 and 4 according to two different constructive systems.

The shelf 2, 102 has a square shape and usually has a rectangular shape or it can show another suitable shape. The shelf 2, 102 is connected with other shelves to form a shelving, a scaffolding or whatever similar vertical structure for the support of objects in the houses and industrial sector.

The shelves must be hooked at their four corners by suitable uprights. To this end, the shelf corners show bevels 8 shaped substantially like an arc of circle of about 90 degrees.

A bracket 7 is soldered on each of the bevelled corners 8 of the shelf 2, 102. The bracket 7 has at least an opening 6, 106 along its vertical extension corresponding to the angle shaped like an arc of circle.

In particular, according to a first embodiment, the shelf 2 is provided with a bracket which has a downward opening 6, as represented in Figure 4.

Alternatively, according to a second embodiment, the shelf 102 is provided with a bracket which has a through hole 106.

In the first case, the threaded body 4 of the supporting element 1 is inserted from bottom to top of the shelf 2, which prevents nut 5 to unscrew.

In the second case, the threaded body 4 is inserted without nut 5 inside the through hole 106 and then, nut 5 is screwed.

The so-described conformation of the elements permits to obtain a total block between cone and plane so that no play is permitted between the plane 2 and the supporting cone 1.

In fact, said type of locking takes place in the presence of cylindrical frustum-conical surfaces. Only a cylindrical frustum-conical surface permits to create a geometrical tightness key and to discharge the blocking thrust to the two contact ends that touch the plane and form an only element with plane and cone.

As a consequence of this, each torsional thrust between shelf 2, 102 and supporting element 1 is blocked and annuled by the geometrical tightness key. Concerning the horizontal and vertical tightness, it will be guaranteed by the nut 5 which beats against the bracket 7 and is screwed in the threaded longitudinal body 4 which passes inside the opening 6. 106.

Advantageously, the frustum-conical elements 1 comprise more threaded longitudinal bodies 4 to connect various adjacent planes, for instance in case of angular crosses of shelvings or if various shelvings must be positioned near each other.

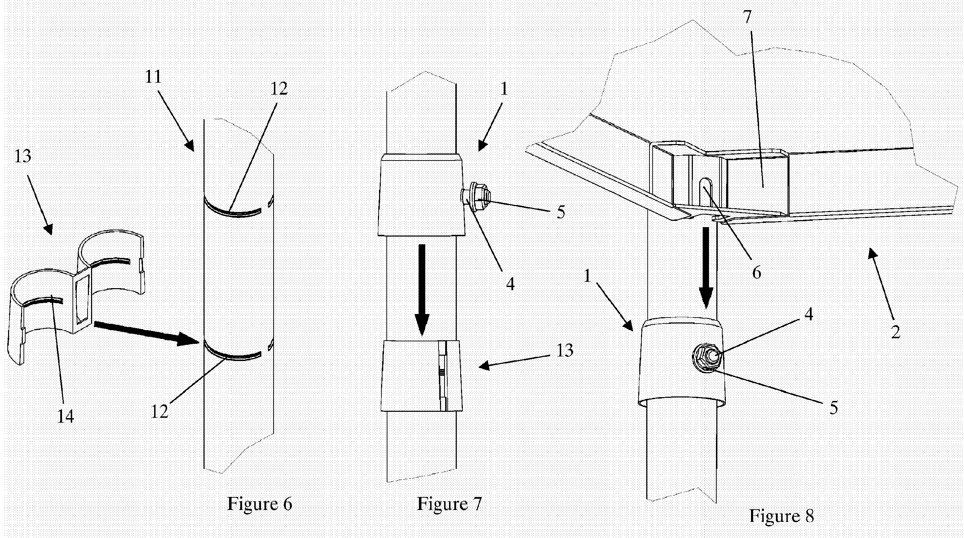

In Figures 6, 7 and 8 it is possible to see the assembling operations for the assembly of a shelving with the hooking system according to the present invention.

The supporting element 1 is inserted as a ring on the upright 12 so as to obtain a joint coupling with the annular body 13; in particular, the joint is obtained through a frustum-conical development of the annular body 13 corresponding to the inner cavity of the supporting element 1.

Then, the shelf is inserted from top to bottom on the supporting element 1 so that the longitudinal threaded body is inserted in the opening 6 of the bracket 7 of the shelf 2.

Finally, the coupling operation is concluded by screwing the bolt 5 in the threaded body 4.

In addition, a connection of two shelves, perpendicularly to each other, is made possible by a connecting element showing a main semi-circular body. The lateral curved surface of said semi-circular body has at least a threaded cavity or as an alternative, at least a longitudinal threaded element. In this way, the lateral curved surface is inserted in the angle bar shaped like an arc of circle of the first shelf and the connecting element is fixed to said angle bar by means of at least a bolt or at least a nut.

The flat surface opposite to said lateral curved surface of said connecting element is provided with hooking elements which hook the lateral plane side of the second shelf.

In this way, two shelves disposed perpendicularly to each other can be connected to each other even without an upright.

Accordingly, the hooking and blocking system for shelves of shelvings, bookcases or the like according to the present invention permits the clamping of shelves on uprights by utilizing the principle of the cone connection, which guarantees an excellent stability as regards torsion, while the screw-bolt coupling permits a perfect clamping according to a horizontal and vertical direction, rapid assembling operations being thus made possible.

A technician of the sector can make changes to the so-described invention and obtain solutions that are to be considered as included in the scope of protection of the present invention as further explained in its peculiar features in the following claims.

## Claims

1. An improved hooking and locking system which is especially suitable to be utilized to form supporting elements for shelves of shelvings, scaffoldings, or the like, **characterized in that** at least an angle bar of the shelf (2, 102) has a recessing (8) shaped like an arc of circle, of about 90° in which there is an opening (6), and that each shelf angle bar is coupled with a supporting element (1) which consists of a frustum-conical piece (3); at least a longitudinal threaded body (4) is fixed to the surface of said frustum-conical piece and is inserted in said opening (6, 106); the supporting element is secured to said shelf angle bar by means of a nut (5) which is screwed in said threaded longitudinal body (4).

2. An improved hooking and locking system as claimed in the foregoing claim, **characterized in that** the angle bar of said shelf (2) comprises at least a bracket (7) which has said opening (6, 106).

3. An improved hooking and locking system as claimed in the foregoing claims, **characterized in that** said opening (6) is turned downwards.

4. An improved hooking and locking system as claimed in the foregoing claims, **characterized in that** said opening (106) is a through hole.

5. An improved hooking and locking system as claimed in the foregoing claims, **characterized in that** said longitudinal threaded body (4) is inserted in said opening (6), said nut (5) being partially screwed .

6. An improved hooking and locking system as claimed in the foregoing claims, **characterized in that** said longitudinal threaded body (4) is inserted in said hole (106) and then, the nut (5) is screwed through the interposing of the bracket (7) between said nut (5) and the supporting element (1).

7. An improved hooking and locking system as claimed in the foregoing claims, **characterized in that** the connection of two shelves, positioned perpendicularly to each other, is obtained through a connecting element showing a main semi-circular body which is inserted in the angle bar shaped like an arc of circle of a first shelf; said main semi-circular body has both a lateral curved surface, which shows a threaded cavity and/or at least a threaded longitudinal element, and a flat surface, which is opposite to said lateral curved surface and shows coupling means which permits the coupling with the lateral flat side of a second shelf.
